# EUROPÄISCHE PATENTSCHRIFT

(11) **EP 2 876 377 B1**
(45) Veröffentlichungstag und Bekanntmachung des Hinweises auf die Patenterteilung: **14.09.2016**
(21) Anmeldenummer: 14189833.8
(22) Anmeldetag: 22.10.2014
(51) Int. Cl.: F24D 19/10, F24J 2/40

(54) **Verfahren zum Betrieb einer Solaranlage**
Method for operating a solar plant
Procédé destiné au fonctionnement d'une installation solaire

(30) Priorität: 22.10.2013 DE 102013111627
(43) Veröffentlichungstag der Anmeldung: 27.05.2015
(73) Patentinhaber: Viessmann Werke GmbH & Co. KG, 35108 Allendorf (DE)
(72) Erfinder: Kuhlmann, Carsten, 22303 Hamburg (DE); Hafner, Bernd, 35108 Allendorf (DE)
(74) Vertreter: Wolf, Michael

(56) Entgegenhaltungen:
- EP-A2- 1 950 499
- EP-A2- 1 953 460
- DE-B3-102005 044 670
- US-A- 4 397 301

## Beschreibung

Die Erfindung betrifft ein Verfahren zum Betrieb einer Solaranlage gemäß dem Oberbegriff des Patentanspruchs 1.

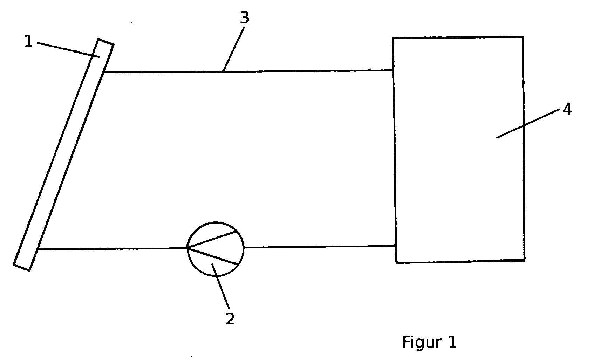

Ein Verfahren der eingangs genannten Art ist nach der DE 10 2008 029 527 A1 (siehe dort Absatz [0003] und Figur 1) bekannt. Bei diesem ist von einem Kollektor aufgenommene Wärme über einen mit einer Pumpe versehenen, ein Wärmeträgermedium führenden Solarkreis einem Speicher zuführbar, wobei die Pumpe eingeschaltet wird, wenn eine Temperatur des Wärmeträgermediums im Kollektors abzüglich eines vordefinierten Einschalthysteresetemperaturwertes größer als eine Temperatur des Wärmeträgermediums im Speichers ist und wobei die Pumpe ausgeschaltet wird, wenn die Temperatur des Wärmeträgermediums im Kollektors abzüglich eines vordefinierten Abschalthysteresetemperaturwertes kleiner als die Temperatur des Wärmeträgermediums im Speichers ist.

EP 1 950 499 A2 zeigt ein Verfahren gemäß des Oberbegriffs von Anspruch 1, bei dem der Pumpenstart als Funktion der Temperaturdifferenz zwischen Kollektor und Speicher optimiert wird.

Da man zur Erzielung eines hohen Anlagenwirkungsgrades den Abschalthysteresetemperaturwert möglichst klein wählt, besteht die Gefahr, dass die Pumpe aufgrund von Temperaturmessungenauigkeiten zu spät abgeschaltet und damit letztlich Wärme aus dem Speicher zum Kollektor zurückgeführt wird.

Der Erfindung liegt die Aufgabe zugrunde, ein Verfahren der eingangs genannten Art zu verbessern. Insbesondere soll ein Verfahren geschaffen werden, mit dem der Abschalthysteresetemperaturwert möglichst genau an die tatsächlichen Temperaturmessungenauigkeiten und Verluste anpassbar ist.

Diese Aufgabe ist mit einem Verfahren der eingangs genannten Art durch die im Kennzeichen des Patentanspruchs 1 aufgeführten Merkmale gelöst.

Nach der Erfindung ist also vorgesehen, dass die Pumpe, nachdem eine vordefinierte Pausenzeit nach ihrem Abschalten vergangen ist, innerhalb einer vordefinierte Prüfungszeit eingeschaltet wird, dass während der Prüfungszeit ein maximaler Betrag eines Temperaturdifferenzwertes zwischen der Temperatur des Wärmeträgermediums im Kollektor und der Temperatur des Wärmeträgermediums im Speicher ermittelt wird und dass dieser Temperaturdifferenzwert als Grundlage zur Neudefinition des Abschalthysteresetemperaturwertes verwendet wird.

Vorteilhafte Weiterbildungen des erfindungsgemäßen Verfahrens ergeben sich aus den abhängigen Patentansprüchen.

Das erfindungsgemäße Verfahren einschließlich seiner vorteilhaften Weiterbildungen gemäß der abhängigen Patentansprüche wird nachfolgend anhand der zeichnerischen Darstellung eines bevorzugten Ausführungsbeispiels näher erläutert.

Es zeigt schematisch
- Figur 1: eine Solaranlage zur Durchführung des erfindungsgemäßen Verfahrens.

Bei der in Figur 1 dargestellten Solaranlage ist von einem Kollektor 1 aufgenommene Wärme über einen mit einer Pumpe 2 versehenen, ein Wärmeträgermedium (insbesondere Frostschutzmittel enthaltendes Wasser) führenden Solarkreis 3 einem Speicher 4 zuführbar. Dabei befindet sich im Speicher 4 eine zweites flüssiges Medium (insbesondere [frostschutzmittelfreies] Wasser), dem die vom Kollektor 1 aufgenommene Wärme über einen Wärmetauscher (nicht extra dargestellt) zugeführt wird.

Bezüglich der genannten Pumpe 2 ist vorgesehen, dass diese über eine (nicht extra dargestellte) Regelungseinrichtung eingeschaltet wird, wenn eine Temperatur T_{Kollektor} des Wärmeträgermediums im Kollektors 1 (zur Messung dieser Kollektor-Temperatur ist an diesem in an sich bekannter Weise ein entsprechender, nicht extra dargestellter Temperatursensor vorgesehen) abzüglich eines vordefinierten Einschalthysteresetemperaturwertes T_{Ein} größer als eine Temperatur T_{Speicher} des Wärmeträgermediums im Speichers 4 ist (zur Messung dieser Speicher-Temperatur ist an diesem in an sich bekannter Weise ein entsprechender, nicht extra dargestellter Temperatursensor vorgesehen).

Weiterhin ist bezüglich der Pumpe 2 vorgesehen, dass diese ausgeschaltet wird, wenn die Temperatur T_{Kollektor} des Wärmeträgermediums im Kollektors 1 abzüglich eines vordefinierten Abschalthysteresetemperaturwertes T_{Aus} kleiner als die Temperatur T_{Speicher} des Wärmeträgermediums im Speichers 4 ist.

Die Maßgabe, dass der Einschalthysteresetemperaturwert T_{Ein} und der Abschalthysteresetemperaturwert T_{Aus} vordefiniert sind, bringt dabei zum Ausdruck, dass diese beiden Werte jeweils in der genannten Regelungseinrichtung abgespeichert sind.

Wesentlich für das erfindungsgemäße Verfahren ist nun, dass die Pumpe 2, nachdem eine vordefinierte Pausenzeit t_{Pause} nach ihrem Abschalten vergangen ist, innerhalb einer vordefinierte Prüfungszeit t_{Prüfung} eingeschaltet wird, dass während der Prüfungszeit t_{Prüfung} ein maximaler Betrag eines Temperaturdifferenzwertes T_{Max} zwischen der Temperatur T_{Kollektor} des Wärmeträgermediums im Kollektor 1 und der Temperatur T_{Speicher} des Wärmeträgermediums im Speicher 4 ermittelt wird und dass dieser Temperaturdifferenzwertes T_{Max} als Grundlage zur Neudefinition des in der Regelungseinrichtung abgespeicherten Abschalthysteresetemperaturwert T_{Aus} verwendet wird.

Die Maßgaben, dass die Pausenzeit t_{Pause} und Prüfungszeit t_{Prüfung} vordefiniert sind, bringt dabei zum Ausdruck, dass diese Zeiten jeweils in der genannten Regelungseinrichtung abgespeichert sind. Ihre Werte sind größer null und werden bei der Auslegung der Solaranlage festgelegt. Bei Bedarf kann vorgesehen sein, dass die Länge der Pausenzeit t_{Pause} bzw. die Länge der Prüfungszeit t_{Prüfung} über die genannte Regelungseinrichtung einstellbar ist.

Die Maßgabe, dass die Pumpe innerhalb einer vordefinierten Prüfungszeit t_{Prüfung} eingeschaltet wird, bringt dabei zum Ausdruck, dass die Pumpe wahlweise während der gesamten oder aber auch nur während eines Teils der Prüfungszeit t_{Prüfung} eingeschaltet ist. Dieser Teil kann dabei wahlweise innerhalb oder an den jeweiligen Rändern der Prüfungszeit t_{Prüfung} positioniert sein.

Die Maßgabe, dass ein maximaler Betrag eines Temperaturdifferenzwertes T_{Max} ermittelt wird, bedeutet dabei, dass mittels der Regelungseinrichung bzw. einer in dieser abgespeicherten Software innerhalb der Prüfungszeit t_{Prüfung} der betragsmäßig größte Temperaturdifferenzwert ermittelt und für die weitere Analyse entsprechend abgespeichert wird.

Genauer betrachtet, ist besonders bevorzugt vorgesehen, dass der Abschalthysteresetemperaturwert T_{Aus} wahlweise verkleinert wird, wenn der maximale Betrag des Temperaturdifferenzwertes T_{Max} größer als der Einschalthysteresetemperaturwert T_{Ein} ist, oder unverändert bleibt, wenn der maximale Betrag des Temperaturdifferenzwertes T_{Max} kleinergleich dem Einschalthysteresetemperaturwert T_{Ein} und größer als der Abschalthysteresetemperaturwert T_{Aus} ist, oder vergrößert wird, wenn der maximale Betrag des Temperaturdifferenzwertes T_{Max} kleinergleich dem Abschalthysteresetemperaturwert T_{Aus} ist.

Weiterhin ist bevorzugt vorgesehen, dass zur Neudefinition des Einschalthysteresetemperaturwertes T_{Ein} die Temperaturdifferenzwerte T_{Max} mehrerer Prüfungszeiten t_{Prüfung} erfasst und miteinander verglichen werden.

Darüber hinaus wird bevorzugt ein Mindestdifferenzwert zwischen dem Einschalthysteresetemperaturwert T_{Ein} und dem Ausschalthysteresetemperaturwert T_{Aus} vordefiniert (und in der Regelungseinrichtung abgespeichert) und der Einschalthysteresetemperaturwert T_{Ein} orientiert an dem Mindestdifferenzwert an den Ausschalthysteresetemperaturwert T_{Aus} angepasst, wenn der maximale Betrag des Temperaturdifferenzwertes T_{Max} mehrfach in Folge kleinergleich dem Abschalthysteresetemperaturwert T_{Aus} ist.

Schließlich wird bevorzugt ein Maximaldifferenzwert zwischen dem Einschalthysteresetemperaturwert T_{Ein} und dem Ausschalthysteresetemperaturwert T_{Aus} vordefiniert (und in der Regelungseinrichtung abgespeichert) und der Einschalthysteresetemperaturwert T_{Ein} orientiert an dem Maximaldifferenzwert an den Ausschalthysteresetemperaturwert T_{Aus} angepasst, wenn der maximale Betrag des Temperaturdifferenzwertes T_{Max} mehrfach in Folge größer als der Einschalthysteresetemperaturwert T_{Ein} ist.

### Bezugszeichenliste

- 1: Kollektor
- 2: Pumpe
- 3: Solarkreis
- 4: Speicher

- T_{Kollektor}: Temperatur des Wärmeträgermediums im Kollektor
- T_{Ein}: Einschalthysteresetemperaturwert
- T_{Aus}: Ausschalthysteresetemperaturwert
- t_{Pause}: Pausenzeit
- t_{Prüfung}: Prüfungszeit
- T_{Max}: maximaler Betrag eines Temperaturdifferenzwertes
- T_{Speicher}: Temperatur des Wärmeträgermediums im Speicher

## Patentansprüche

1. Verfahren zum Betrieb einer Solaranlage, bei dem von einem Kollektor (1) aufgenommene Wärme über einen mit einer Pumpe (2) versehenen, ein Wärmeträgermedium führenden Solarkreis (3) einem Speicher (4) zuführbar ist,
wobei die Pumpe (2) eingeschaltet wird, wenn eine Temperatur (T_{Kollektor}) des Wärmeträgermediums im Kollektors (1) abzüglich eines vordefinierten Einschalthysteresetemperaturwertes (T_{Ein}) größer als eine Temperatur (T_{Speicher}) des Wärmeträgermediums im Speichers (4) ist und
wobei die Pumpe (2) ausgeschaltet wird, wenn die Temperatur (T_{Kollektor}) des Wärmeträgermediums im Kollektors (1) abzüglich eines vordefinierten Abschalthysteresetemperaturwertes (T_{Aus}) kleiner als die Temperatur (T_{Speicher}) des Wärmeträgermediums im Speichers (4) ist,
**dadurch gekennzeichnet,**
**dass** die Pumpe (2), nachdem eine vordefinierte Pausenzeit (t_{Pause}) nach ihrem Abschalten vergangen ist, innerhalb einer vordefinierte Prüfungszeit (t_{Prüfung}) eingeschaltet wird, dass während der Prüfungszeit (t_{Prüfung}) ein maximaler Betrag eines Temperaturdifferenzwertes (T_{Max}) zwischen der Temperatur (T_{Kollektor}) des Wärmeträgermediums im Kollektor (1) und der Temperatur (T_{Speicher}) des Wärmeträgermediums im Speicher (4) ermittelt wird, und
**dass** dieser Temperaturdifferenzwert (T_{Max}) als Grundlage zur Neudefinition des Abschalthysteresetemperaturwertes (T_{Aus}) verwendet wird.

2. Verfahren nach Anspruch 1,
**dadurch gekennzeichnet,**
**dass** der Abschalthysteresetemperaturwert (T_{Aus}) wahlweise
a) verkleinert wird, wenn der maximale Betrag des Temperaturdifferenzwertes (T_{Max}) größer als der Einschalthysteresetemperaturwert (T_{Ein}) ist,
b) unverändert bleibt, wenn der maximale Betrag des Temperaturdifferenzwertes (T_{Max}) kleinergleich dem Einschalthysteresetemperaturwert (T_{Ein}) und größer als der Abschalthysteresetemperaturwert (T_{Aus}) ist, oder
c) vergrößert wird, wenn der maximale Betrag des Temperaturdifferenzwertes (T_{Max}) kleinergleich dem Abschalthysteresetemperaturwert (T_{Aus}) ist.

3. Verfahren nach Anspruch 1 oder 2,
**dadurch gekennzeichnet,**
**dass** zur Neudefinition des Einschalthysteresetemperaturwertes (T_{Ein}) die Temperaturdifferenzwerte (T_{Max}) mehrerer Prüfungszeiten (t_{Prüfung}) erfasst und miteinander verglichen werden.

4. Verfahren nach Anspruch 3,
**dadurch gekennzeichnet,**
**dass** ein Mindestdifferenzwert zwischen dem Einschalthysteresetemperaturwert (T_{Ein}) und dem Ausschalthysteresetemperaturwert (T_{Aus}) vordefiniert und der Einschalthysteresetemperaturwert (T_{Ein}) orientiert an dem Mindestdifferenzwert an den Ausschalthysteresetemperaturwert (T_{Aus}) angepasst wird, wenn der maximale Betrag des Temperaturdifferenzwertes (T_{Max}) mehrfach in Folge kleinergleich dem Abschalthysteresetemperaturwert (T_{Aus}) ist.

5. Verfahren nach Anspruch 3,
**dadurch gekennzeichnet,**
**dass** ein Maximaldifferenzwert zwischen dem Einschalthysteresetemperaturwert (T_{Ein}) und dem Ausschalthysteresetemperaturwert (T_{Aus}) vordefiniert und der Einschalthysteresetemperaturwert (T_{Ein}) orientiert an dem Maximaldifferenzwert an den Ausschalthysteresetemperaturwert (T_{Aus}) angepasst wird, wenn der maximale Betrag des Temperaturdifferenzwertes (T_{Max}) mehrfach in Folge größer als der Einschalthysteresetemperaturwert (T_{Ein}) ist.

## Claims

1. Method for operating a solar plant wherein heat received by a collector (1) can be supplied to a storage device (4) via a solar circuit (3) which is provided with a pump (2) and which carries a heat transfer medium,
wherein the pump (2) is switched on when a temperature (T_{Kollektor}) of the heat transfer medium in the collector (1) minus a predefined switch-on hysteresis temperature (T_{Ein}) is higher than a temperature (T_{Speicher}) of the heat transfer medium in the storage device (4) and
wherein the pump (2) is switched off when the temperature (T_{Kollektor}) of the heat transfer medium in the collector (1) minus a predefined switch-off hysteresis temperature (T_{Aus}) is lower than the temperature (T_{Speicher}) of the heat transfer medium in the storage device (4),
**characterized in**
**that** after a predefined pause time (t_{Pause}) has elapsed after switching off the pump (2), the pump (2) is switched on within a predefined test time (t_{Prüfung}), that during the test time (t_{Prüfung}) a maximum value of a temperature difference (T_{Max}) between the temperature (T_{Kollektor}) of the heat transfer medium in the collector (1) and the temperature (T_{Speicher}) of the heat transfer medium in the storage device (4) is determined and this temperature difference (T_{Max}) is used as the basis for redefinition of the switch-off hysteresis temperature (T_{Aus}).

2. The method according to claim 1,
**characterized in**
**that** the switch-off hysteresis temperature (T_{Aus}) is as desired
a) reduced if the maximum value of the temperature difference (T_{Max}) is greater than the switch-on hysteresis temperature (T_{Ein}).
b) remains unchanged if the maximum value of the temperature difference (T_{Max}) is less than or equal to the switch-on hysteresis temperature (T_{Ein}) and greater than the switch-off hysteresis temperature (T_{Aus}) or
c) is increased if the maximum value of the temperature difference (T_{Max}) is less than or equal to the switch-off hysteresis temperature (T_{Aus})·

3. The method according to claim 1 or 2,
**characterized in**
**that** for redefinition of the switch-on hysteresis temperature (T_{Ein}) the temperature differences (T_{Max}) of several test times (t_{Prüfung}) are determined and compared with one another.

4. The method according to claim 3,
**characterized in**
**that** a minimum difference between the switch-on hysteresis temperature (T_{Ein}) and the switch-off hysteresis temperature (T_{Aus}) is predefined and the switch-on hysteresis temperature (T_{Ein}) is adapted to the switch-off hysteresis temperature (T_{Aus}) oriented on the minimum difference if the maximum value of the temperature difference (T_{Max}) is several times in succession less than or equal to the switch-off hysteresis temperature (T_{Aus}).

5. The method according to claim 3,
**characterized in**
**that** a maximum difference between the switch-on hysteresis temperature (T_{Ein}) and the switch-off hysteresis temperature (T_{Aus}) is predefined and the switch-on hysteresis temperature (T_{Ein}) is adapted to the switch-off hysteresis temperature (T_{Aus}) oriented on the maximum difference if the maximum value of the temperature difference (T_{Max}) is several times in succession greater than the switch-on hysteresis temperature (T_{Ein}).

## Revendications

1. Procédé de fonctionnement d'une installation solaire, dans lequel la chaleur absorbée par un collecteur (1) peut être introduite par l'intermédiaire d'un circuit solaire (3) guidant un fluide caloporteur, pourvu d'une pompe (2) dans un dispositif de stockage (4), dans lequel la pompe (2) est mise en service, quand une température (T_{Kollektor}) du fluide caloporteur dans le collecteur (1) moins une valeur de température d'hystérésis de mise en service prédéfinie (T_{Ein}) est plus grande qu'une température (T_{Speicher}) du fluide caloporteur dans le dispositif de stockage (4) et dans lequel la pompe (2) est mise hors service, quand la température (T_{Kollektor}) du fluide caloporteur dans le collecteur (1) moins une valeur de température d'hystérésis de mise hors service prédéfinie (T_{Aus}) est plus petite qu'une température (T_{Speicher}) du fluide caloporteur dans le dispositif de stockage (4),
**caractérisé en ce que**
la pompe (2), après qu'un temps de pause prédéfini (t_{Pause}) ) après sa mise hors service s'est écoulé, est mise en service en l'espace d'un temps de vérification prédéfini (t_{Prüfung}), **en ce que** pendant le temps de vérification (t_{Prüfung}) un montant maximal d'une valeur de différence de température (Tₘₐₓ) entre la température (T_{Kollektor}) du fluide caloporteur dans le collecteur (1) et la température (T_{Speicher}) du fluide caloporteur dans le dispositif de stockage (4) est déterminé, et
**en ce que** cette valeur de différence de température (T_{Max}) est utilisée comme base pour une nouvelle définition de la valeur de température d'hystérésis de mise hors service (T_{Aus}).

2. Procédé selon la revendication 1,
**caractérisé en ce que**
la valeur de température d'hystérésis de mise hors service (T_{Aus}) au choix
a) est diminuée, quand le montant maximal de la valeur de différence de température (T_{Max}) est plus grand que la valeur de température d'hystérésis de mise en service (T_{Ein}), et
b) reste inchangée, quand le montant maximal de la valeur de différence de température (T_{Max}) est plus petit ou égal à la valeur de température d'hystérésis de mise en service (T_{Ein}) et plus grande que la valeur de température d'hystérésis de mise hors service (T_{Aus}), ou
c) est augmentée, quand le montant maximal de la valeur de différence de température (T_{Max}) est plus petit ou égal à la valeur d'hystérésis de mise hors service (T_{Aus}).

3. Procédé selon la revendication 1 ou 2,
**caractérisé en ce que**
pour une nouvelle définition de la valeur de température d'hystérésis de mise en service (T_{Ein}) les valeurs de différence de température (T_{Max}) de plusieurs temps de vérification (t_{Prüfung}) sont détectées et comparées les uns avec les autres.

4. Procédé selon la revendication 3,
**caractérisé en ce que**
une valeur de différence minimale entre la valeur de température d'hystérésis de mise en service (T_{Ein}) et la valeur de température d'hystérésis de mise hors service (T_{Aus}) est prédéfinie et la valeur de température d'hystérésis de mise en service (T_{Ein}) orientée sur la valeur de différence minimale est adaptée à la valeur de température d'hystérésis de mise hors service (T_{Aus}), quand le montant maximal de la valeur de différence de température (T_{Max}) est plusieurs fois en séquence plus petit ou égal à la valeur de température d'hystérésis de mise hors service (T_{Aus}).

5. Procédé selon la revendication 3,
**caractérisé en ce que**
une valeur de différence maximale entre la valeur de température d'hystérésis de mise en service (T_{Ein}) et la valeur de température d'hystérésis de mise hors service (T_{Aus)} est prédéfinie et la valeur de température d'hystérésis de mise en service (T_{Ein}) orientée sur la valeur de différence maximale est adaptée à la valeur de température d'hystérésis de mise hors service (T_{Aus}), quand le montant maximal de la valeur de différence de température (T_{Max}) est plusieurs fois en séquence plus grand que la valeur de température d'hystérésis de mise en service (T_{Ein}).
